Europäisches Patentamt

European Patent Office

Office européen des brevets

(19)

(11) Publication number: **0 208 382 B1**

# EUROPEAN PATENT SPECIFICATION

(12)

(45) Date of publication of patent specification: **18.09.91**

(51) Int. Cl.⁵: **C08F 291/02**, C08F 279/02, C08F 2/02, //(C08F291/02, 212:04,220:12),(C08F279/02, 212:04,220:12)

(21) Application number: **86201206.9**

(22) Date of filing: **07.07.86**

The file contains technical information submitted after the application was filed and not included in this specification

(54) Rubber-reinforced styrenic polymer resins having improved flow and gloss characteristics.

(30) Priority: **08.07.85 NL 8501949**

(43) Date of publication of application:
**14.01.87 Bulletin 87/03**

(45) Publication of the grant of the patent:
**18.09.91 Bulletin 91/38**

(84) Designated Contracting States:
**BE DE FR GB IT NL SE**

(56) References cited:
**EP-A- 029 174          EP-A- 0 009 638
EP-A- 0 033 365       FR-A- 2 355 033
US-A- 3 676 527       US-A- 3 868 434
US-A- 4 308 355**

**CHEMICAL ABSTRACTS, vol. 82, no. 10, 10th March 1975, page 66, abstract no. 58952w, Columbus, Ohio, US**

(73) Proprietor: **THE DOW CHEMICAL COMPANY
2030 Dow Center Abbott Road P.O. Box 1967
Midland Michigan 48640-1967(US)**

(72) Inventor: **van Nuffel, Claude T.E.
Muizelstraat 16
B-9040 Oostakker(BE)**

(74) Representative: **Smulders, Theodorus A.H.J.,
Ir. et al
Vereenigde Octrooibureaux Nieuwe Parklaan
107
NL-2587 BP 's-Gravenhage(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to rubber-reinforced monovinylidene aromatic polymer resins prepared by a mass polymerization process and modified with certain acrylic acid ester monomers.

Rubber-reinforced thermoplastic materials derived from mass polymerization, in the presence of the rubber, of a monovinylidene aromatic compound such as styrene or a derivative of styrene and, one or more other comonomers such as acrylonitrile, are employed in a wide variety of commercial applications such as packaging, refrigerator linings, furniture, domestic appliances and toys. These thermoplastic materials are often referred to as "styrenic polymer resins".

The toughness, flow and gloss properties of these styrenic polymer resins are important and need to be optimized for a particular end-use application. For example, it is desirable that the styrenic polymer resins ("styrene molding polymers") used in injection molding applications flow relatively easily, at the pressures employed, to completely fill a mold which can sometimes be of a complex or intricate shape. It is also desired that the resultant article have good toughness as well as a uniform and fairly high level of gloss. In general, unmodified rubber-reinforced styrenic polymer resins do not possess the desired flow characteristics for use in injection molding and other end-use applications while the gloss properties of articles molded from such resins tend to be quite sensitive to molding conditions.

To improve the flow properties of the styrenic polymer resin, it has become a common practice to add a flow promoter or plasticizer such as mineral oil to the resin. The plasticizer or flow promoter can be added before, during or after the preparation of the styrenic polymer resin. Unfortunately, the effect of mineral oil or other similar plasticizer on the flow characteristics of the styrenic polymer resins is limited and can be accompanied by undesirable side effects. The presence of mineral oil or other plasticizer can often lead to a phenomenon known as "mold sweating". Specifically, the mineral oil or plasticizer diffuses to the interface between the styrenic polymer resin and the surface of the mold which often results in a non-uniform surface of the molded article.

It is also known that the flow properties of a styrenic polymer resin can be improved by preparing the styrenic polymer at a broader molecular weight distribution or by decreasing the molecular weight of the styrenic polymer. Unfortunately, as the molecular weight of the styrenic polymer becomes broader, the styrenic polymer resin often exhibits a lower strength. Moreover, methods for preparing a styrenic polymer at a broad molecular weight distribution are generally inefficient, i.e., the rate of conversion from monomer to polymer is generally lower. Alternatively, when the styrenic polymer is prepared at lower molecular weights, the resulting styrenic polymer resin is generally more brittle and less flexible, with a coincident decrease in strength.

Mass-polymerized rubber-modified styrenic resins, due to the generally large size of the rubber particles, are also known to be generally more difficult to mold into articles having uniform good gloss. While the molding conditions can be adapted to obtain optimized gloss for a resin, it is difficult to maintain exactly constant mold conditions over a period of time and especially in large and/or complex mold designs. On the other hand, emulsion polymerization processes are well-known for the preparation of rubber-reinforced styrenic polymers having good gloss properties. Such resins, due to their small, dense rubber particles are known to be suitable for producing molded articles wherein the gloss level is uniformly high and relatively independent of the molding conditions or mold size and shape. Such resins are found, however, for given levels of rubber-reinforcement, to have poor toughness (i.e., impact resistance) as compared to mass polymerization products. In USP 4 308 355, it is taught that toughness of emulsion polymerized ABS-type resin is improved by the use of 1 to 15 weight percent of acrylic acid ester (e.g., butyl acrylate) in the rubber-grafting step. The toughness of these emulsion resins is still found to be inadequate for many applications, especially when compared to mass-polymerized resins.

In view of the stated deficiencies in the toughness, gloss and flow characteristics of the prior art rubber-reinforced styrenic polymer resins, it remains highly desirable to provide such a styrenic polymer resin having improved property combinations and a method for preparing such a styrenic polymer resin.

Accordingly, in one aspect, the present invention is a rubber-reinforced, mass polymerized styrenic polymer resin obtainable by a process described below comprising (a) a polymer matrix derived from one or more monovinylidene aromatic compounds and one or more unsaturated nitriles and (b) a rubber dispersed as discrete particles therethrough, wherein the polymeric matrix further comprises, in polymerized form, from 0.1 to 15 weight percent of an ester of acrylic acid with an alcohol having from 2 to 8 carbon atoms.

In another aspect, the present invention is a method for the production of a rubber-reinforced styrenic polymer resin which comprises mass-polymerizing in the presence of a rubber a monovinylidene aromatic compound and one or more unsaturated nitriles characterized in that from 0.1 to 15 weight percent, based on the total weight of the monomers, of an ester of acrylic acid with an alcohol having from 2 to 8 carbon atoms is copolymerized with the monovinylidene aromatic compound(s) and unsaturated nitrile(s).

Surprisingly, when a small amount, i.e., less than 15 weight percent, of an ester of acrylic acid is copolymerized with the monovinylidene aromatic compound and any other optionally employed comonomers to prepare the polymer matrix of a styrenic polymer resin, the resulting styrenic polymer resin exhibits improved flow characteristics. This is especially surprising since the esters of methacrylic acid, particularly those esters of methacrylic acid with an alcohol having from 1 to 5 carbon atoms, have not been found to significantly improve the flow characteristics of the styrenic polymer resin. This improvement in flow properties means that less time is required to fill molds with the molten polymer in injection molding process.

In addition, due to the fact that the acrylic ester is present in copolymerized form in the styrenic polymer (i.e., is copolymerized with the monovinylidene aromatic compound and other comonomers), the problems of mold sweating which are associated with using relatively large concentrations of an unbound plasticizer such as mineral oil are reduced and/or eliminated. The resins according to the present invention thereby provide a real productivity advantage in terms of the reduced time required for mold cleaning.

It is equally as surprising and unexpected that the use of such acrylic acid ester comonomer is additionally found to reduce the sensitivity of the gloss properties obtained in molded articles to variations in molding conditions. This is very important in the injection molding of complex and/or large parts where the molten resin may be exposed to varying mold conditions in a single mold while flowing from the injection port to fill the entire mold. The ultimate result of the improved resin according to the invention is that tough, glossy articles can now be produced in standard injection molding processes with reduced cycle times and mold maintenance.

The method of the present invention is used to obtain good gloss and flow characteristics of rubber-reinforced styrenic polymer resins the so-called ABS-type. The polymer resins of the present invention are useful in essentially any application in which the unmodified styrenic polymer resin can be employed. Due to their exceptional flow properties, the styrenic polymer resins of the present invention are particularly useful as styrene molding polymers in injection molding applications such as employed in the preparation of toys, appliances and electrical equipment and in the extrusion thermoformable applications.

The styrenic polymer matrix resins of the present invention are derived from a monovinylidene aromatic compound, an unsaturated nitrile and an ester of acrylic acid.

Representative monovinylidene aromatic compounds which can be employed herein include styrene, alkyl-substituted styrenes (e.g., alpha-methylstyrene and alpha-ethylstyrene) and ring-substituted styrenes (e.g., vinyl toluene, particularly para-vinyltoluene, ortho-ethylstyrene and 2,4-dimethylstyrene); ring-substituted halogenated styrene such as chlorostyrene and 2,4-dichlorostyrene; styrenes substituted with both a halo and an alkyl group such as 2-chloro-4-methylstyrene and vinylanthracene. In general, the preferred monovinylidene aromatic compound(s) employed in preparing the styrenic polymer resin is styrene or a combination of styrene and alpha-methylstyrene (in which combination the alpha-methylstyrene comprises advantageously from 10 to 50, more advantageously from 15 to 40, weight percent of the total weight of the styrene and alpha-methylstyrene). Styrene is the most preferred monovinylidene aromatic compound.

The esters of acrylic acid suitably employed in the practice of the present invention are those esters which are capable of forming, when homopolymerized, a polymer having a low glass transition temperature ($T_g$) of less than $0\,^\circ$C, preferably less than $-20\,^\circ$C wherein $T_g$ is measured by the ASTM test method designated D3418-75. The acrylic acid ester of the present invention is an ester of acrylic acid with an alcohol having from 2 to 8 carbon atoms. Representative of such esters are ethylacrylate, iso-propylacrylate, n-propylacrylate, n-butylacrylate, sec-butylacrylate, octylacrylate and 2-ethylhexyl-acylate. Of these esters, those having from 3 to 6, most preferably 4, carbon atoms are preferred. n-Butylacrylate is the most preferred acrylic acid ester.

In preparing the styrenic polymer resin of the present invention, the acrylic acid ester is employed in an amount from 0.1 to 15 weight percent, said weight percents being based on the total weight of the matrix styrenic polymer. When lower levels are employed the above-mentioned flow and gloss property improvements are not observed while higher levels will tend to lower resin heat softening points and cause the resins to have unacceptably long cycle times in typical molding operations. Within said compositional limitation, the amount of the acrylic acid ester most advantageously employed is dependent on the specific monomeric components employed and their concentrations as well as whether the styrenic polymer resin is reinforced by other reinforcing agent, e.g., glass fibers. In general, the styrenic polymer comprises, in polymerized form, from 0.2 to 12, more preferably from 0.5 to 10, weight percent of acrylic acid ester, most preferably 1 to 7 weight percent, said weight percents being based on the total weight of the matrix styrenic polymer.

In addition to the monovinylidene aromatic compound and acrylic acid ester, one or more unsaturated nitriles is employed to form the styrenic polymer. Examples of the unsaturated nitriles are acrylonitrile, ethacrylonitrile, methacrylonitrile and mixtures thereof. Other monomers can also be employed to form the polymer matrix ; examples are the alpha,beta-ethylenically unsaturated carboxylic acids such as acrylic and methacrylic acid; the esters of methacrylic acid such as ethyl methacrylate or methyl methacrylate and the vinyl esters such as vinyl acetate.

Of the various styrenic polymer resins comprising additional comonomers, polymer resins of particular interest in the practice of the present invention are ABS type polymer resins comprising, as a matrix, a copolymer of at least one monovinylidene aromatic compound and at least one unsaturated nitrile modified by the acrylic acid ester. Preferred of the unsaturated nitriles is acrylonitrile. In preparing the styrenic polymer, the amount of the unsaturated nitrile(s) most advantageously employed will vary depending on the physical and chemical properties desired in the final styrenic polymer resin. In general, the styrenic polymer will advantageously be derived from 5 to 35, preferably from 15 to 25, weight percent of the unsaturated nitrile(s) wherein said weight percent is based on the total weight of the matrix styrenic polymer.

Rubbers useful in preparing rubber-reinforced styrenic polymer resins are well-known in the art and reference is made thereto for the purposes of this invention. Advantageously, the rubber employed in preparing the rubber-reinforced polymer resin is a homopolymer or copolymer of an alkadiene which exhibits a second order transition temperature not higher than $0°C$ and preferably not higher than about $-20°C$ as determined by conventional methods, e.g., ASTM Test Method D-746-52 T. Copolymers of ethylene, propylene and, optionally, a non-conjugated diene (e.g., EPDM rubbers) can also be employed. Preferably, the rubber is a homopolymer of a 1,3-conjugated diene such as butadiene, isoprene, piperylene, chloroprene or a copolymer of the conjugated diene with a comonomer such as a monovinylidene aromatic compound, e.g., styrene (which is commonly chemically bonded randomly, in blocks or as grafted branches to the alkadiene polymer); an alpha,beta-ethylenically unsaturated nitrile such as acrylonitrile or an alpha,beta-olefin such as ethylene or propylene. The rubber may also contain a small amount of a cross-linking agent such as divinylbenzene, but excessive cross-linking can result in the loss of the rubber characteristics of the rubber.

Preferred rubbers are homopolymers of 1,3-butadiene and block or random copolymers of at least 50, more preferably from 55 to 85, weight percent of 1,3-butadiene and up to 50, more preferably from 15 to 45, weight percent of a monovinylidene aromatic compound, preferably styrene. In general, the rubber is employed in an amount such that the resultant rubber-reinforced resin contains from 3 to 20 weight percent rubber.

Rubber-reinforced polymers of particular interest herein include the transparent, rubber-reinforced styrenic resins modified by including the acrylic acid ester in the polymer matrix phase. In general, the modified, transparent, rubber-reinforced styrenic polymer resins comprise a polymer matrix phase of at least one monovinylidene aromatic compound, an ester of methacrylic acid, preferably methyl methacrylate and an unsaturated nitrile, modified with the acrylic acid ester. In preparing the modified, transparent, rubber-reinforced styrenic polymer resin, the methacrylate comonomer and the acrylic acid ester are employed in amounts sufficient to render the rubber-reinforced product transparent. Although such amounts will vary depending on the specific monomers and rubber employed in preparing the rubber-reinforced styrenic polymer resin, the methacrylate and the acrylic acid ester are advantageously employed in an amount such that their combination totals from 15 to 70 weight percent of the styrenic matrix polymer, with the acrylic acid ester being employed in an amount such that it comprises from 0.1 to 15 weight percent of the styrenic matrix polymer. In general, the modified, transparent ABS type resin will preferably comprise from 25 to 35 weight percent of the methacrylate and from 0.2 to 10 weight percent of the acrylic acid ester. These resins typically comprise 20 to 55 weight percent of a monovinylidene aromatic compound and 5 to 35 weight percent of an unsaturated nitrile.

In the practice of the present invention, the styrenic polymer resin having the improved flow characteristics is prepared by copolymerizing the monovinylidene aromatic compound(s) with the ester of the acrylic acid and other comonomers. In general, the mass-type polymerization techniques and conditions which can be employed in preparing rubber-reinforced styrenic polymer resins such as ABS-type resins are advantageously employed in preparing the styrenic polymer resins of the present invention.

For example, in preparing ABS- type resins, mass or a combination of mass/suspension polymerization techniques are most commonly employed and are also suitably employed in the practice of the present invention wherein the acrylic acid ester in copolymerized with the monomers conventionally employed in preparing said resins. Illustrative mass polymerization techniques are described in U.S. Patent Nos. 3 243 841, 3 488 744 and 3 903 202.

Using mass polymerization techniques, the styrenic polymer resin is preferably prepared in one or more substantially linear stratified flow or so-called plug flow type reactors, which may or may not comprise recirculation of a portion of the partially polymerized product in a stirred tank reactor wherein the contents of the reactor are essentially uniform throughout, or a combination of the two. Depending of the specific monomeric components employed and the amount of rubber present in the polymerization reaction mixture, an organic liquid reaction diluent such as aromatic hydrocarbon or inertly substituted aromatic hydrocarbon (e.g., ethylbenzene, benzene or toluene) and a free-radical initiator such as a peroxide initiator (e.g., azobisisobutyronitrile, 1,1-bis(tert-butylperoxy)cyclohexane or dibenzoylperoxide) can be employed. The use of an organic liquid reaction diluent and/or free-radical initiator and the amounts, if any, of both to be employed in the polymerization are well-known to the skilled artisan or easily determined using simple experimental techniques.

In general, the organic liquid reaction diluent is employed to control the viscosity of the polymerization mixture as well as to provide sufficient heat transfer thereof. If employed, it will generally comprise from 2 to 20 weight percent based on the total weight of the polymerization mixture (i.e., the copolymerizable monomers, rubber, and the organic liquid reaction diluent). The initiator can be employed to vary the product properties of the polymer as well as to modify the rate of polymerization. In addition, the free-radical initiator can be employed to initiate grafting of rubber in the polymerization mixture with polymerizing and polymerized monomers. In general, if employed, the initiator is used in an amount from 50 to 5000, preferably from 100 to 2000, weight parts per million weight parts of the monomer employed. The mass polymerization mixture can further contain other additives such as an antioxidant (e.g., an alkylated phenol such as di-tert-butyl-p-cresol), a polymerization aid (e.g., a chain transfer agent such as an alkyl mercaptan) or a mold release agent (e.g., zinc stearate). In addition, a plasticizer or lubricant such as mineral oil, epoxidized soy bean oil, dioctyl adipate, dioctyl phthalate or butyl stearate can be included in the polymerization mixture. However, due to the flow promoting effect of the acrylic acid ester to the resulting styrenic polymer resin, the added plasticizer or lubricant is generally not needed or employed in lower than conventional amounts. These materials can be added directly to the polymerization mixture or can be post-added to the resulting product such as by melt blending.

Temperatures at which polymerization can be conducted are dependent on the specific components employed but will generally vary from 75° to 225°C, preferably 90° to 190°. In the preparation of the styrenic polymer resin using the described mass polymerization techniques, the polymerization is continued to the desired degree of completion and the resulting product is then treated to remove any unreacted monomer such as by flashing of the monomer and other volatiles at an elevated temperature under vacuum.

When employing mass polymerization techniques for preparing a rubber-reinforced styrenic polymer resin, the rubber is generally first dissolved in polymerizable monomer (e.g., styrene nitrile and the acrylic acid ester) and this monomer/rubber solution is added to the mass polymerization mixture. In mass polymerization processes using a plug-flow type reactor, upon addition of the monomer/rubber solution to the polymerization system, the monomers are polymerized and, upon initial formation of polymer, the initially prepared polymer comes out of solution and forms a discontinuous phase comprising polymer dissolved in monomer dispersed throughout a continuous phase of the solution of rubber and monomer. Eventually, sufficient amounts of the monomer are polymerized and the discontinuous phase becomes the continuous phase with the rubber forming a discontinuous phase dispersed throughout a continuous phase of the copolymer. This phenomenom is referred to as phase inversion which term means generally the conversion of the polymer from a discontinuous phase dispersed in a continuous phase of the rubber through a point where there is no distinct continuous or discontinuous phase in the polymerization mixture to a continuous polymer phase having a rubber dispersed therethrough. Alternatively, when a stirred tank reactor is employed in a mass-type polymerization process, phase inversion can occur essentially immediately upon the addition of the monomer/rubber solution to the polymerization mixture.

It is important in the mass polymerization process and product according to the present invention, in obtaining good toughness to achieve rubber particle sizes generally larger than 0.1, preferably larger than 0.5 micrometer, more preferably larger than 0.7 micrometer and most preferably at least 1.0 micrometer. This is done in mass polymerization processes by techniques known to those skilled in the art including amount and type of agitation, the selection of the rubber type, polymerization conditions, and additives such as mercaptans or peroxides which affect the amount of polymer grafted to the rubber during the particle sizing phase.

Although the modified ABS- type resins according to the invention are prepared using the described mass polymerization techniques, ABS-type resins often having relatively high rubber concentrations are also conventionally prepared using emulsion polymerization techniques. Illustrative of the so-called emulsion polymerization techniques for the preparation of a rubber-reinforced resin are described in U.S. Patent Nos. 3 509 238, 3 751 526, and 4 308 555. It is possible, and sometimes desirable to blend materials prepared according to the invention with amounts of such emulsion polymerized resins.

The following experiments are set forth to illustrate the advantages of the present invention and should not be construed to limit its scope. In the experiments, all parts and percentages are by weight unless otherwise indicated.

In the experiments, melt flow rate was determined using test methods designated ASTM D-1238 and the Vicat heat distortion temperature, which is an indication of the heat softening point of the polymer, was measured using the test methods described by ASTM D-1525-65T, Rate B. The tensile properties were measured using test method designated ASTM-T-638 on samples which were compression molded at a melt temperature of 180°C. The tensile yield is expressed in Newtons per square millimeter ($N/mm^2$) and the elongation is the elongation at break expressed as a percentage of the original length. The impact strength is the notched Izod impact strength expressed In Joules/meter (J/m) measured using the test method described by ASTM-D-256. The test specimens for measuring the impact strength were prepared by compression molding at a mold temperature of 180°C for 15 minutes. The molecular weight of the styrenic polymer was measured using gel permeation chromatography and the test method designated ASTM D-363, without correction between the copolymer and polystyrene standards and the solution viscosity was measured using the test method designated ASTM D-445.

Experiment 1

To a reactor vessel having a temperature control means and an agitator means were added 1500 parts of a solution comprising 7 % of a blockcopolymer comprising 70% polymerised butadiene and 30% polymerized styrene, 26.2% styrene, 21.1% methyl methacrylate, 6.5 % n-butylacrylate, 18.9% acrylonitrile, 20% ethylbenzene, 0.03 % of a free radical initiator, 0.07 % of a chain transfer agent and 0.2 % of an antioxidant. The polymerization mixture was exposed to constant agitation at a rate of 100 rpm. Polymerization temperatures were maintained between 100°C and 155°C. Polymerization was continued until 75% of the original monomer fed to the polymerization system had been polymerized. The resulting product comprised 11.8 % rubber which was dispersed throughout the copolymer matrix at a particle size of 1μm. The copolymer matyrix consisted, in polymerized form, of 45.7 % styrene, 28 % methyl methacrylate, 5.9 % n-butylacrylate and 20.4 % acrylonitrile. The melt flow trate of the resulting transparent ABS type resin was 2.3 g/10 min. The vicat softening temperature of the copolymer product was 96°C.

Experiment 2

Using identical techniques, a transparent ABS type resin was prepared comprising 10 percent of the block copolymer rubber dispersed throughout the continuous copolymer matrix phase at a particle size of 2.5 micrometer. The copolymer matrix phase, consisted, in polymerized form, of 48 percent styrene, 29 percent methylmethacrylate, 8 percent n-butylacrylate and 15 percent acrylonitrile.

The melt flow rate of the resulting transparent ABS type copolymer resin was 5.3 g/10 min and the Vicat softening temperature was 90.4°C.

Comparative Experiment A

Using the techniques of Experiment 1 , a transparent ABS type copolymer resin product was prepared consisting of 9.6 percent of the block copolymer rubber dispersed at a volume average particle size of 0.3 micrometer. The copolymer matrix phase consisted, in polymerized form, of 44.8 percent styrene, 32.5 percent methylmethacrylate and 22.7 percent acrylonitrile. The melt flow rate of this product was only 0.6 g/10 min and the Vicat softening temperature was 101°C

Comparative Experiment B

Using the techniques of Experiment 1, a transparent ABS type copolymer resin was prepared which comprised 90.3 percent of a copolymer matrix and 9.7 percent of rubber dispersed as discrete particles having a volume average particle size of 0.4 micron throughout the copolymer matrix. The copolymer matrix consisted, in polymerized form, of 46.7 percent styrene, 34.7 percent methylmethacrylate, and 18.6 percent acrylonitrile.

The melt flow rate of the transparent ASS type resin which contained no butylacrylate was 0.46 g/10 min. The Vicat softening temperature of this product was 103°C.

As evidenced by the copolymer products of Experiments 4 and 5 and Comparative Experiments C and D, the transparent ABS type resins having a continuous copolymer matrix phase containing, in polymerized form, the lower alkyl acrylate, exhibited unexpectedly superior flow properties as compared to an equivalent transparent ABS type resin having a copolymer matrix phase which contained no lower alkyl acrylate.

Experiment 3

Using the techniques of Experiment 1, an ABS-type resin was prepared. Specifically, the polymerization mixture consisted of 55.4 percent styrene, 3.0 percent n-butylacrylate, 15.5 percent acrylonitrile, 7.4 percent of a polybutadiene rubber identical to that employed in Experiment 1, and 18.7 percent of ethylbenzene, and also contained 0.015 weight parts of a free-radical initiator, and 0.3 weight parts of an antioxidant. Polymerization temperatures were maintained between 10°C to 155°C. 1000 ppm of a chain transfer agent was added during polymerization. Polymerization was continued until 74 percent of the original monomer fed to the polymerization system had been polymerized. The resulting product comprised 12 percent rubber which was dispersed throughout the copolymer matrix phase at a particle size of 0.7 micrometer. The copolymer matrix phase consisted, in polymerized form, of 73.9 percent styrene, 3.4 percent n-butylacrylate and 22.7 percent acrylonitrile. The melt flow rate of the resulting ABS type resin was 3.2 g/10 min. The 60° Gardner gloss and flow properties were found to be generally better than that of a commercially available mass polymerized ABS resin having similar chemical composition and rubber particle size (i.e., the other physical properties are generally equivalent) but not containing any acrylic acid ester.

**Claims**

1. A method for the production of a rubber-reinforced styrenic polymer which comprises mass- or mass/suspension polymerizing in the presence of a rubber one or more monovinylidene aromatic compounds, one or more unsaturated nitriles and, optionally, one or more other monomers selected from the group consisting of alpha, beta - ethylenically unsaturated carboxylic acids, the esters of methacrylic acid and vinyl esters, characterized in that from 0.1 to 15 weight percent, based on the total weight of the monomers, of an ester of acrylic acid with an alcohol having from 2 to 8 carbon atoms. is copolymerized with the monovinylidene aromatic compound(s) and unsaturated nitrile(s).

2. A rubber-reinforced mass-polymerized styrenic polymer resin obtainable by a process according to claim 1 comprising a) a polymer matrix derived from one or more monovinylidene aromatic compounds one or more unsaturated nitriles and, optionally, one or more other monomers selected from the group consisting of alpha, beta - ethylenically unsaturated carboxylic acid, the esters of methacrylic acid and vinyl esters, and b) a rubber dispersed as discrete particles there-through, wherein the polymeric matrix further comprises, in polymerized form, from 0.1 to 15 weight percent of an ester of acrylic acid with an alcohol having from 2 to 8 carbon atoms.

3. The styrenic polymer resin of claim 2, characterized in that the acrylic acid ester is ethylacrylate, iso-propylacrylate, n-propylacrylate, n-butylacrylate, sec-butylacrylate, octylacrylate and 2-ethylhexylacrylate.

4. The styrenic polymer resin of claim 2 and 3, characterized in that the monovinylidene aromatic compound is styrene or an alkyl- or ring-substituted styrene derivative wherein a halogen and/or 1 to 3 carbon alkyl group is substituted.

5. The styrenic polymer resin of claim 4, characterized in that the monovinylidene aromatic compound is styrene or a combination of styrene and alpha-methylstyrene.

6. The styrenic polymer resin of claim 2-5, characterized in that the unsaturated nitrile is acrylonitrile.

7. The styrenic polymer resin of claim 2-6, characterized in that the styrenic polymer matrix comprises, in polymerized form, one or more monovinylidene aromatic compounds, an unsaturated nitrile, an ester of methacrylic acid and the acrylic acid ester.

8. The styrenic polymer resin of claim 7, characterized in that the styrenic polymer matrix is derived from 20 to 55 weight percent of the monovinylidene aromatic compound, from 5 to 35 weight percent of the unsaturated nitrile and from 15 to 70 weight percent of the esters of methacrylic and acrylic acid, provided that there be from 0.1 to 15 percent of an acrylic acid ester.

9. The styrenic polymer resin of claim 7-8, characterized in that the monovinylidene aromatic compound is styrene or a mixture of styrene and alpha-methyl styrene, the unsaturated nitrile is acrylonitrile, the ester of methacrylic acid is methyl methacrylate and the acrylic acid ester is ethyl acrylate, isopropyl acrylate, n-propyl acrylate, n-butyl acrylate or sec-butyl acrylate.

## Revendications

1. Procédé pour préparer un polymère styrénique renforcé au caoutchouc, qui comprend la polymérisation, en masse ou en masse et en suspension, en présence d'un caoutchouc, d'un ou plusieurs composé(s) monovinylidène-aromatique(s), d'un ou plusieurs nitrile(s) insaturé(s) et,
facultativement, d'un ou plusieurs autre(s) monomère(s) choisi(s) dans le groupe constitué par les acides carboxyliques à insaturation alpha,bêta-éthylènique, les esters de l'acide méthacrylique et les esters vinyliques, caractérisé en ce que l'on copolymérise de 0,1 à 15 pour cent en poids, par rapport au poids total des monomères, d'un ester d'acide acrylique, formé avec un alcool ayant de 1 à 8 atomes de carbone, avec le(s) composé(s) monovinylidène-aromatique(s) et le(s) nitrile(s) insaturé(s).

2. Résine polymère styrénique polymérisée en masse, renforcée au caoutchouc, que l'on peut obtenir par un procédé conforme à la revendication 1, comprenant a) une matrice polymère obtenue à partir d'un ou plusieurs composé(s) monovinylidène-aromatique(s), un ou plusieurs nitrile(s) insaturé(s) et, facultativement, un ou plusieurs autre(s) monomère(s) choisi(s) dans le groupe constitué par les acides carboxyliques à insaturation alpha,bêta-éthylènique, les esters de l'acide méthacrylique et les esters vinyliques, et b) un caoutchouc, qui y est dispersé sous forme de particules isolées, la matrice polymère comprenant de plus, sous forme polymérisée, de 0,1 à 15 pour cent en poids d'un ester d'acide acrylique, formé avec un alcool ayant de 2 à 8 atomes de carbone.

3. La résine polymère styrénique de la revendication 2, caractérisée en ce que l'ester d'acide acrylique est l'acrylate d'éthyle l'acrylate d'isopropyle, l'acrylate de n-propyle, l'acrylate de n-butyle, l'acrylate de sec.-butyle; l'acrylate d'octyle et l'acrylate de 2-éthylhexyle.

4. La résine polymère styrénique des revendications 2 et 3, caractérisée en ce que le composé monovinylidènearomatique est le styrène ou un dérivé substitué sur le groupe alkyle ou sur le cycle du styrène, le substituant étant un atome d'halogène et/ou un groupe alkyle ayant de 1 à 3 atomes de carbone.

5. La résine polymère styrénique de la revendication 4, caractérisée en ce que le composé monovinylidènearomatique est le styrène ou une combinaison de styrène et d'alpha-méthylstyrène.

6. La résine polymère styrénique des revendications 2 à 5, caractérisée en ce que le nitrile insaturé est l'acrylonitrile.

7. La résine polymère styrénique des revendications 2 à 6, caractérisée en ce que la matrice polymère styrénique comprend, sous forme polymérisée, un ou plusieurs composé(s) monovinylidène-aromatique(s), un nitrile insaturé, un ester d'acide méthacrylique et l'ester d'acide acrylique.

8. La résine polymère styrénique de la revendication 7, caractérisée en ce que la matrice polymère styrénique est obtenue à partir de 20 à 55 pour cent en poids de composé monovinylidène-aromatique, de 5 à 35 pour cent en poids de nitrile insaturé et de 15 à 70 pour cent en poids des esters d'acides acrylique et méthacrylique, à la condition qu'il y ait de 0,1 à 15 pour cent d'ester d'acide acrylique.

9. La résine polymère styrénique des revendications 7 et 8, caractérisée en ce que le composé monovinylidènearomatique est le styrène ou un mélange de styrène et d'alpha-méthylstyrène, le nitrile insaturé est l'acrylonitrile, l'ester d'acide méthacrylique est le méthacrylate de méthyle et l'ester d'acide acrylique est l'acrylate d'éthyle, l'acrylate d'iso-propyle, l'acrylate de n-propyle, l'acrylate de n-butyle ou l'acrylate de sec.-butyle.

## Patentansprüche

1. Verfahren zum Herstellen eines kautschukverstärkten Styrolpolymeren durch Block- oder Block-/Suspensionspolymerisation einer oder mehrerer monovinylidenaromatischen Verbindungen, eines oder mehrerer ungesättigten Nitrile und, gegebenenfalls, einer oder mehrerer anderer Monomere, ausgewählt aus der aus alpha-, beta-ethylenisch ungesättigten Carbonsäuren, den Estern von Methacrylsäure und Vinylestern bestehenden Gruppe, in Gegenwart eines Kautschuks,
**dadurch gekennzeichnet,**
daß von 0,1-15 Gew.-%, bezogen auf Gesamtgewicht der Monomere, eines Esters von Acrylsäure mit einem 2-8 Kohlenstoffatome aufweisenden Alkohol mit der(den) monovinylidenaromatischen Verbindung(en) und ungesättigten Nitril (en) copolymerisiert werden.

2. Kautschukverstärktes, blockpolymerisiertes Styrolpolymerharz, erhältlich nach einem Verfahren nach Anspruch 1, enthaltend a) eine aus einer oder mehreren monovinylidenaromatischen Verbindungen, einem oder mehreren ungesättigten Nitrilen und, gegebenenfalls, einem oder mehreren anderen Monomeren, ausgewählt aus der aus alpha-, beta-ethylenisch ungesättigten Carbonsäuren, den Estern von Methacrylsäure und Vinylestern bestehenden Gruppe abgeleitete polymere Matrix und b) einen Kautschuk in Form diskreter, in der Matrix dispergierter Teilchen, wobei die polymere Matrix weiterhin in polymerisierter Form von 0,1-15 Gew.-% eines Esters von Acrylsäure mit einem 2-8 Kohlenstoffatome aufweisenden Alkohol enthält.

3. Styrolpolymerharz nach Anspruch 2,
**dadurch gekennzeichnet,**
daß der Acrylsäureester Ethylacrylat, Isopropylacrylat, n-Propylacrylat, n-Butylacrylat, sec-Butylacrylat, Octylacrylat und 2-Ethylhexylacrylat ist.

4. Styrolpolymerharz nach Anspruch 2 und 3,
**dadurch gekennzeichnet,**
daß die monovinylidenaromatische Verbindung Styrol oder ein Alkyl- oder Ring-substituiertes Styrolderivat ist mit einem Halogen und/oder 1-3 Kohlenstoffatome aufweisender Alkylgruppe als Substituenten.

5. Styrolpolymerharz nach Anspruch 4,
**dadurch gekennzeichnet,**
daß die monovinylidenaromatische Verbindung Styrol oder eine Kombination von Styrol und alpha-Methylstyrol ist.

6. Styrolpolymerharz nach Anspruch 2-5,
**dadurch gekennzeichnet,**
daß das ungesättigte Nitril Acrylnitril ist.

7. Styrolpolymerharz nach Anspruch 2-6,
**dadurch gekennzeichnet,**
daß die Styrolpolymermatrix in polymerisierter Form enthält eine oder mehrere mononvinylidenaromatische Verbindungen, ein ungesättigtes Nitril, einen Ester von Methacrylsäure und den Acrylsäureester.

8. Styrolpolymerharz nach Anspruch 7,
**dadurch gekennzeichnet,**
daß die Styrolpolymermatrix abgeleitet ist von 20-55 Gew.-% der monovinylidenaromatischen Verbindung, von 5-35 Gew.-% des ungesättigten Nitrils und von 15-70 Gew.-% der Ester von Methacrylsäure und Acrylsäure, mit der Bedingung, daß von 0,1-15 % eines Acrylsäureresters vorhanden sind.

9. Styrolpolymerharz nach Anspruch 7-8,
**dadurch gekennzeichnet,**
daß die monovinylidenaromatische Verbindung Styrol oder eine Mischung von Styrol und alpha-Methylstyrol ist, das ungesättigte Nitril Acrylnitril ist, der Ester von Methacrylsäure Methylmethacrylat ist und der Acrylsäureester Ethylacrylat, Isopropylacrylat, n-Propylacrylat, n-Butylacrylat oder sec-Butylacrylat ist.